# EUROPEAN PATENT APPLICATION

(11) **EP 2 610 788 A1**
(43) Date of publication of application: **03.07.2013**
(21) Application number: 11306783.9
(22) Date of filing: 27.12.2011
(51) Int. Cl.: G06Q 10/02, G06Q 10/10

(54) **Seamless travel hive engine and method of same**

(71) Applicant: Amadeus, 06410 Biot (FR)
(72) Inventor: Laval, Marc, 06600 Antibes (FR); Marziali, Andrea, 06600 Antibes (FR); Negri, Maurizio, 06130 Grasse (FR); Nowitz, Steve, 06220 Vallauris (FR); Puyhaubert, Yohann, 06600 Antibes (FR)
(74) Representative: Hautier, Nicolas

(57) **Abstract**

A seamless travel hive engine automatically stores a user's travel-related information in a seamless travel hive repository, and may generate experience marks for displaying and sharing a user's travel-related information. The system provides a continuity of the travel-related user experience through time by storing, updating, aggregating, and sharing information among multiple users and across multiple devices and applications, including social networks. The seamless travel hive engine continuously and dynamically integrates a seamless travel hive repository, travel reservation module, experience mark manager module, comparison module, tagging module, alert module, and consumer travel-related applications, and may provide a platform for a continuous cross-device travel booking flow.

## Description

### BACKGROUND OF INVENTION

### 1. Field of Invention

The present invention is directed to a computer-implemented integrated travel system.

### 2. Discussion of Background Information

Typical modern travel booking systems utilize passenger records which are associated with and contain information relating to specific bookings, such as a booked flight, and which are stored in a reservation system. The passenger record may be a passenger name record ("PNR"), and the reservation system may be a global distribution system ("GDS"). A GDS is a computer reservation system typically utilized jointly by airlines in different countries that includes reservation databases of suppliers in many countries.

Additionally, there are numerous travel-related systems which facilitate the integration of disparate travel reservation systems and various third-party travel providers. Many of these systems also provide commercial interactions with information or data aggregating systems, through which a travel purveyor may push information to a specific user. Further, these travel-related systems may also facilitate the communication of a user's travel-related information to members of the user's social network.

However, existing travel-related systems do not provide for a seamless continuity and complete integration of the travel-related user experience, through time, among multiple users, and across multiple devices (mobile and web-based) and applications (social channels, consumer applications, third party applications, travel industry applications, travel search applications, and other related emerging technologies). Specifically, these existing travel industry systems do not allow users or groups of users to interact in a seamless way with the services that they provide, as users of these existing systems may be forced to repeat data input and data transactions (e.g. travel searches or travel solutions, which may include reservation, booking and point of sale systems) when accessing travel reservation systems from multiple channels or when sharing findings and preferences with other users; the data may be stored on a particular device itself and may be limited to one physical device or browser. Further, these existing systems are not structured as a centralized stand-alone fully integrated system for storing different types of travel-related information and for sharing such information with many different systems, and through multiple channels; these exiting systems may also place restrictions on the type of content that may be stored and may not fully support data that is dynamic, and which may be modified manually or automatically by the system in response to external events (e.g. schedule changes, price change alerts, flight changes, flight delays, flight disruptions, gate changes, date changes, time changes).

### SUMMARY

A seamless travel hive engine and method may automatically store a user's travel-related information (such as search history, fares found, PNRs booked, preferences, profile information) in a seamless travel hive repository, and may generate experience marks for displaying and sharing a user's travel-related information. This system may provide a continuity of the travel- related user experience through time by storing, updating, aggregating, and sharing information among multiple users and across multiple devices and applications, including social networks. The seamless travel hive engine may be accessed via any channel (web module, mobile application, third party applications).

The seamless travel hive engine may continuously and dynamically integrate a seamless travel hive repository, travel reservation module, experience mark manager module, comparison module, tagging module, alert module, and consumer travel-related applications, and may provide a platform for a continuous cross-device travel booking flow. Any authorized application may interact with the seamless travel hive engine through generated experience marks. Further, this system may automatically generate an experience mark based on the occurrence of an external event, and may also facilitate a user's booking of a travel reservation from another user's shared experience mark.

Specifically, the system and method may provide for the complete integration and continuity of the travel-related user experience, through time, among multiple users, and across multiple devices (mobile and web-based) and applications (social channels and networks, consumer applications, third party applications, travel industry applications, travel search applications and reservation engines, such as a GDS, and other related emerging technologies). Travel-related information may be stored in a centralized repository, the seamless travel hive repository, and such information may be available at any time, from anywhere, and to the user, travel-related systems (GDS, fares engine, reservation engines, airlines, travel agencies) and third parties (third party systems such as social networks, search engines, as well as other users). There is no restriction on the type of content that may be shared or stored, as the data may reference a travel reservation entity like a passenger profile of a passenger record, such as a PNR, or the data may represent, and be used to resume, a previously started travel shopping experience such as a flight booking or a low fare search. Such travel-related information may also be static or dynamic. Further, the system may dynamically process such information, and may be capable of responding to external events (e.g. schedule changes, price change alerts, changes in flight seat availability) by updating and supplementing such travel-related information.

In one aspect, the seamless travel hive engine may generate experience marks, which may be atomic information units, including generic embeddable blocks, which may hold different kinds of information content. These experience marks may be private, and thus may belong to and may only be accessed by a particular user; alternatively, these experience marks may be public, and thus may be shared with other users and applications via social networks, mobile messages (SMS/MMS) or email messages, or other modes of communication, to facilitate the sharing of a particular user's travel-related information. For example, a user may utilize a public experience mark to share fares the user booked with friends via a social network application, mobile message (SMS/MMS), or email message. These friends may open this public experience mark on an airline mobile application, airline website, and may restart the booking flow directly. Additionally, the seamless travel hive system may offer search services among all public experience marks, which may allow users to search for itineraries created by other users.

The data contained in these experience marks may be mutable and dynamic, as such travel-related data may be manually updated by an authorized actor, or it may be automatically updated by the seamless travel hive engine itself. Further, an experience mark manager module may utilize these experience marks to generate notifications of new travel-related information. For example, the computer-implemented seamless travel hive engine may generate notifications about flight changes, flight delays, flight disruptions, gate changes, date changes, or time changes. Authorized actors (e.g. users, third party applications) may perform operations on an experience mark, and such operations may be limited by the particular rights the actor has on the object; such operations may include creating, reading, modifying, deleting and sharing the experience mark. These authorized actors may also use these experience marks to perform data mining via a data mining module. For example, an airline may utilize and generate an experience mark to push a special offer to a particular customer based on the experience marks created by said customer. Further, active data operations (e.g. best fare price refresh, flight seat availability refresh) may be performed on these experience marks, as third party systems may send notifications to the seamless travel hive engine to make updates to particular experience marks, which may ultimately notify final users of these events. For example, a flight status change in the reservation system may trigger an update of all associated experience marks, and a notification of all travelers who use the seamless travel hive.

Additionally, a comparison module may aggregate travel-related information contained in these experience marks. This comparison module may compare travel solutions based on price, time, convenience. Further, this comparison module may facilitate a search based on the number of experience marks that have been created for a particular travel reservation. For example, when comparing flight solutions, a popularity criterion may be utilized for the comparison, which may be based on the number of experience marks that have been created for the same or for a similar flight solution.

In yet another aspect, a tagging module may generate tags associated with particular experience marks, through which a user may tag such experience marks with keywords. For example, a user may tag a particular experience mark with the keywords "far" or "expensive." The tagging module may also sort experience marks based on the tags associated with said experience marks, and may also group together experience marks with similar tags. Additionally, users may utilize these tags to set up alerts for particular travel-related information, such as routes, flights, via an alert module, which automatically generates or updates experience marks based on the occurrence of an external event. For example, a last seat availability alert may be created for a specific flight and fare, or a fare alert may be created for a specific route and dates. The alert module stores such an alert as an experience mark in the seamless travel hive system. For example, a reservation system may notify the seamless travel hive engine of an inventory or fare change, and the engine may propagate these changes to the associated experience marks to notify the user.

The details of one or more embodiments are set forth in the following detailed description of the invention and the accompanying drawings. Other objectives, features, and advantages of the invention will be more readily understood upon consideration of the following detailed description of the invention, taken in conjunction with the accompanying drawings, and with the claims.

### BRIEF DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:
Figure 1 illustrates an exemplary application of a seamless travel hive engine, which stores a user's travel-related information in a seamless travel hive repository, and which may interface with a social network and multiple devices to share said travel-related information among multiple devices and users.
Figure 2 illustrates an exemplary seamless travel hive engine and its components comprising therein.
Figure 3 depicts the generation of experience marks which may be utilized for displaying, comparing, tagging and sharing a user's travel-related data, and which allows for active data operations.
Figure 4 depicts the generation of experience marks based on travel-related information contained in a user's experience marks and in members' of a user's social network's experience marks, and the booking of a travel reservation from another said shared experience mark.

### DETAILED DESCRIPTION

A computer-implemented seamless travel hive engine and method automatically stores a user's travel-related information in a seamless travel hive repository, generates experience marks for displaying and sharing a user's travel-related information, and continuously and dynamically integrates the seamless travel hive repository, a travel reservation module, an experience mark manager module, a comparison module, a tagging module, an alert module and consumer travel-related applications, with each other. The system facilitates multi-channel sharing of travel-related information by providing for the seamless integration among devices (mobile and web-based), users, and across applications (social channels, consumer applications, third party applications, travel industry applications and travel search applications). The seamless travel hive system dynamically processes travel-related information, and any authorized third party application may interact with this system through the generated experience marks.

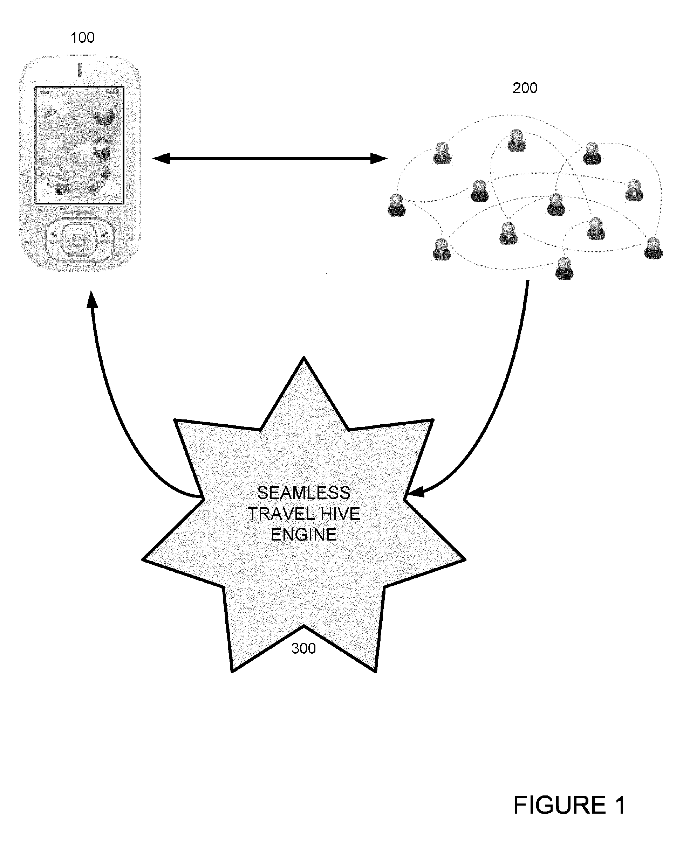

Referring to Figure 1, the seamless travel hive engine 300 allows users to share and access each other's travel-related information among multiple devices 100, including web and mobile-based devices, and across multiple applications 200, including social networks, consumer applications, third party applications, travel industry applications, travel search applications, and various other channels. Thus, the system provides for the seamless continuity of the user experience, as users are not required to duplicate data input and workflows when accessing a travel reservation system from multiple channels and devices, when sharing travel findings and preferences with other users, and across various travel-related systems.

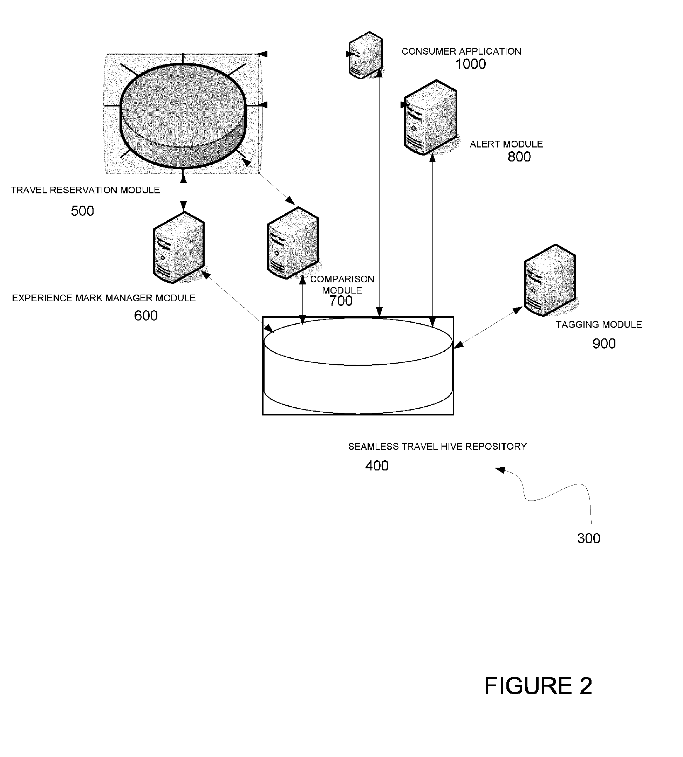

Referring to Figure 2, the seamless travel hive engine 300 includes a seamless travel hive repository 400, a travel reservation module 500, an experience mark manager module 600, a comparison module 700, an alert module 800, and a tagging module 900. The seamless travel hive engine is integrated continuously and seamlessly with consumer applications 1000 (e.g. travel industry applications and travel search applications), as any authorized application may interact, communicate, and share travel-related information with the seamless travel hive engine. A travel reservation module 500 may include one or more travel-related systems; the travel reservation module is fully and continuously integrated with the seamless travel hive repository 400, and may facilitate the automatic storage of said travel-related information in the seamless travel hive repository. In one embodiment, the travel reservation module may interface with a reservation system.

The seamless travel hive repository 400 stores a user's travel-related information. There is no restriction on the type of content that may be stored and shared, as such travel-related information may reference a travel reservation entity like a passenger profile of a passenger record, or a set of data relating to a travel-related transaction (e.g. travel-related search, fare review); for example, such data may allow a user to resume a previously started travel reservation booking experience (e.g. flight booking, low fare search). Additionally, the travel-related information may be static or dynamic, as the seamless travel hive engine 300 is capable of reacting to external events (changes in travel schedules, flight seat availability, prices). Thus, this travel-related information may be updated manually by an authorized user, or automatically by the system via processes occurring within the seamless travel hive repository 400.

In another aspect, the seamless travel hive engine 300 stores a user's travel-related information as atomic information units, by generating experience marks. These experience marks may be made of embeddable blocks holding different kinds of informational content, and the data contained in said experience marks may be modified manually by users or automatically by the seamless travel hive system itself. Any authorized application 1000 may interact with the seamless travel hive engine by utilizing these experience marks. Active data operations such as best fare price refresh or seat availability refresh, may be performed on these experience marks. In one embodiment, passenger experience marks may be generated which contain and store travel-related passenger information, and which may be utilized during the reservation booking process. In another embodiment, payment experience marks may be generated, which contain and store a user's payment-related information, and which may be utilized during the payment process of reservation booking.

In another aspect, these experience marks may be private, and thus may belong only to a particular user; alternatively, they may be public, and thus may be shared via various channels including social network applications, mobile messaging (SMS/MMS), or email messaging. In one embodiment, users may open these public experience marks on a mobile application, such as an airline mobile application, or may open them on the airline website. In another embodiment, once a public experience mark is created, the seamless travel hive engine 300 may return a public URL to uniquely identify it, and this URL may be accessed by different consumer applications on different devices; in this embodiment, a user may be redirected to a specific webpage related to the content of an experience mark, or the system may return the actual experience mark object content.

In yet another embodiment, authorized users or applications 1000 may utilize these experience marks to perform data mining via a data mining module 1050. An airline application may push a special personalized offer to a particular customer user via an experience mark generated for said customer; for example, an airline may push a personalized offer to a user via a discount code or an offer for a complimentary ancillary service, on a special experience mark that is generated by the airline, and which can be accessed only by said particular user. Airlines may further utilize these public experience marks to adjust their fares and even their traffic to match the demand as indicated by these public experience marks.

Additionally, third party systems and applications may send notifications to the seamless travel hive engine to update particular experience marks, which in turn will notify users of said external event; for example, a flight status change in a reservation system may trigger an update of all associated experience marks, and a notification to all users who have access to view said experience marks. In one embodiment, an experience mark manager module 600 may generate notifications of new travel-related information. In yet another aspect, the computer-implemented seamless travel hive engine 300 may proactively generate experience marks based on the travel-related information contained in a particular user's experience marks and in members' of a user's social network's experience marks.

In yet another aspect, a tagging module 900 may generate tags associated with particular experience marks through which a user may tag such experience marks with keywords. For example, a user may tag a particular experience mark with the keywords "far" or "expensive." The tagging module 900 may also sort experience marks based on the tags associated with said experience marks, and may also group together experience marks with similar tags. Additionally, users may utilize these tags to set up alerts for particular travel-related information, such as routes, flights, via an alert module 800, which automatically generates or updates experience marks based on the occurrence of an external event. For example, a last seat availability alert may be created for a specific flight and fare, or a fare alert may be created for a specific route and dates. The alert module 800 may store such an alert as an experience mark in the seamless travel hive system. For example, a reservation system may interface with and notify the seamless travel hive engine of an inventory or fare change, and the engine will propagate these changes to the associated experience marks to notify the affected users.

Additionally, a comparison module 700 may aggregate travel-related information contained in these experience marks. This comparison module 700 may compare travel solutions based on price, time, convenience. Further, this comparison module may facilitate a search based on the number of experience marks that have been created for a particular travel reservation. For example, when comparing flight solutions, a popularity criterion may be utilized for the comparison, which is based on the number of experience marks that have been created for the same or for a similar flight solution.

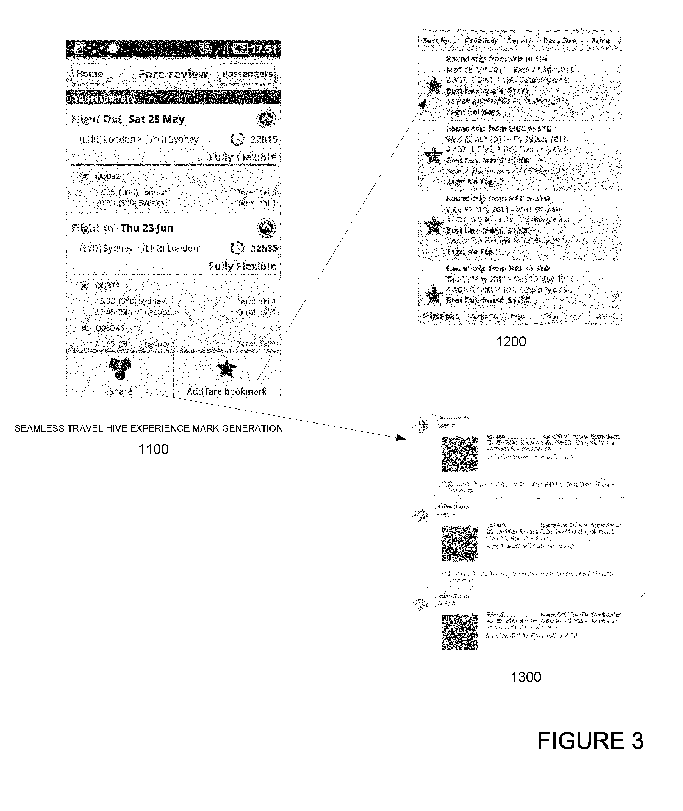

Referring to Figure 3, when a user performs a travel-related search 1100, the user may choose to share the user's search results 1300. The seamless travel hive engine facilitates this sharing of travel-related information via various channels, including social network applications, mobile messaging (SMS/MMS), email messaging, and among multiple users 1300. In another aspect, the seamless travel hive engine may store a user's travel-related information as atomic information units by generating experience marks 1200. Active data operations, such as best fare price refresh, seat availability refresh, may be performed on these experience marks. Also, a user may tag a particular experience mark with the keywords "far" or "expensive." The tagging module may also sort experience marks based on the tags associated with said experience marks, and may also group together experience marks with similar tags.

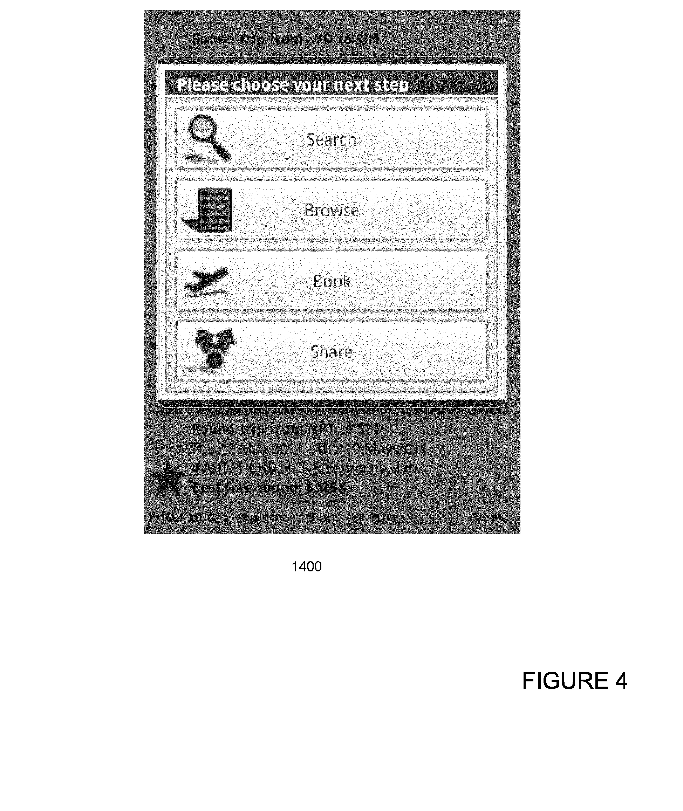

Referring to Figure 4, the computer-implemented seamless travel hive engine facilitates the booking of a user's travel reservation 1400. In one aspect, to access the seamless travel hive engine, a user must be identified by the system by some log on procedure. In one embodiment, a unique user identifier associates a user's travel-related system account with said user's travel-related information that is stored in the seamless travel hive repository. In yet another embodiment, the seamless travel hive system facilitates a user's booking of a travel reservation from another user's shared experience mark.

Additionally, the seamless travel hive engine may utilize the generated public experience marks to facilitate a user's searching for itineraries of other users. The seamless travel hive engine may also proactively generate experience marks based on travel-related information contained in a user's experience marks and contained in members' of a user's social network's experience marks. In one embodiment, the seamless travel hive system may record user behavior (e.g. search history, sharing of travel-related information, experience mark generation), and the recording of such behavior may be utilized to personalize a user's travel reservation experience.

The various seamless travel hive inspiration techniques, methods, and systems described above can be implemented in part or in whole using computer-based systems and methods. Additionally, computer-based systems and methods can be used to augment or enhance the functionality described above, increase the speed at which the functions can be performed, and provide additional features and aspects as a part of or in addition to those described elsewhere in this document. Various computer-based systems, methods and implementations in accordance with the above-described technology are presented below.

In one implementation, a general-purpose computer can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP), HTTP Secure, or Secure Hypertext Transfer Protocol.

One or more of the application programs can be installed on the internal or external storage of the general-purpose computer. Alternatively, in another implementation, application programs can be externally stored in or performed by one or more device(s) external to the general-purpose computer.

The general-purpose computer includes a central processing unit (CPU) for executing instructions in response to commands, and a communication device for sending and receiving data. One example of the communication device is a modem. Other examples include a transceiver, a communication card, a satellite dish, an antenna, a network adapter, network interface card, mobile internet device, or some other mechanism capable of transmitting and receiving data over a communications link through a wired or wireless data pathway.

The general-purpose computer can include an input/output interface that enables wired or wireless connection to various peripheral devices. Examples of peripheral devices include, but are not limited to, a mouse, a mobile phone, a personal digital assistant (PDA), a smartphone, a tablet computer, a keyboard, a display monitor with or without a touch screen input, and an audiovisual input device. In another implementation, the peripheral devices can themselves include the functionality of the general-purpose computer. For example, the mobile phone or the PDA can include computing and networking capabilities and function as a general purpose computer by accessing the delivery network and communicating with other computer systems. Examples of a delivery network include the Internet, the World Wide Web, WANs, LANs, analog or digital wired and wireless telephone networks (e.g., Public Switched Telephone Network (PSTN), Integrated Services Digital Network (ISDN), or Digital Subscriber Line (xDSL)), radio, television, cable, or satellite systems, and other delivery mechanisms for carrying data. A communications link can include communication pathways that enable communications through one or more delivery networks.

In one implementation, a processor-based system (e.g., a general-purpose computer) can include a main memory, preferably random access memory (RAM), and can also include a secondary memory. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, or flash memory devices including memory cards, USB flash drives, solid-state drives, etc. The removable storage drive reads from or writes to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

In one embodiment, the computer system can also include a communications interface that allows software and data to be transferred between computer system and external devices. Examples of communications interfaces can include a modem, a network interface (such as, for example, an Ethernet card), a communications port, and a PCMCIA slot and card. Software and data transferred via a communications interface are in the form of signals, which can be electronic, electromagnetic, optical or other signals capable of being received by a communications interface. These signals are provided to communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer usable medium" are generally used to refer to media such as a removable storage device, a disk capable of installation in a disk drive, and signals on a channel. These computer program products provide software or program instructions to a computer system.

Computer programs (also called computer control logic) are stored in the main memory or secondary memory. Computer programs can also be received via a communications interface. Such computer programs, when executed, enable the computer system to perform the features as discussed herein. In particular, the computer programs, when executed, enable the processor to perform the described techniques. Accordingly, such computer programs represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, causes the processor to perform the functions of the techniques described herein.

In another embodiment, the elements are implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements are implanted using a combination of both hardware and software.

In another embodiment, the computer-based methods can be accessed or implemented over the World Wide Web by providing access via a Web Page to the methods described herein. Accordingly, the Web Page is identified by a Universal Resource Locator (URL). The URL denotes both the server and the particular file or page on the server. In this embodiment, it is envisioned that a client computer system interacts with a browser to select a particular URL, which in turn causes the browser to send a request for that URL or page to the server identified in the URL. Typically the server responds to the request by retrieving the requested page and transmitting the data for that page back to the requesting client computer system (the client/server interaction is typically performed in accordance with the hypertext transport protocol or HTTP). The selected page is then displayed to the user on the client's display screen. The client can then cause the server containing a computer program to launch an application to, for example, perform an analysis according to the described techniques. In another implementation, the server can download an application to be run on the client to perform an analysis according to the described techniques.

A number of embodiments of the invention have been described. Nevertheless, it will be understood that various modifications may be made without departing form the spirit and the scope of the invention.

## Claims

1. A computer-implemented seamless travel hive engine **characterized in that** it comprises:
a seamless travel hive repository that stores a user's travel-related information, and that stores a unique user identifier corresponding to each user;
a travel reservation module comprising one or more travel-related systems;
an experience mark manager module that generates notifications of new travel-related information; and
a comparison module;
wherein said unique user identifier associates a user's travel-related system account with said user's travel-related information that is stored in the seamless travel hive repository; and
wherein the computer-implemented seamless travel hive engine:
automatically stores a user's travel-related information in the seamless travel hive repository;
generates experience marks for displaying and sharing a user's travel-related information; and
continuously and dynamically integrates the seamless travel hive repository, the travel reservation module, the experience mark manager module, the comparison module and consumer travel-related applications with each other; and
wherein said comparison module aggregates travel-related information contained in said experience marks, and compares travel solutions based on price or convenience.

2. The computer-implemented seamless travel hive engine of claim 1, wherein said seamless travel hive engine proactively generates experience marks based on travel-related information contained in a user's experience marks and in members' of a user's social network's experience marks.

3. The computer-implemented seamless travel hive engine of claim 1, wherein said seamless travel hive engine automatically generates or updates said travel-related information in response to external events.

4. The computer-implemented seamless travel hive engine of claim 1, wherein the seamless travel hive engine facilitates a user's booking of a travel reservation.

5. The computer-implemented seamless travel hive engine of claim 1, further comprising a tagging module which generates tags for tagging experience marks with keywords.

6. The computer-implemented seamless travel hive engine of claim 5, wherein said tagging module sorts experience marks based on said tags or groups together experience marks with similar tags.

7. The computer-implemented seamless travel hive engine of claim 1, wherein said comparison module facilitates a search based on the number of experience marks that have been created for a particular travel reservation.

8. A computer-implemented seamless travel hive method **characterized in that** it comprises the following steps:
automatically storing a user's travel-related information and a unique user identifier corresponding to each user for associating a user's travel-related system account with said user's travel travel-related information in a seamless travel hive repository;
generating experience marks for displaying and sharing a user's travel-related information;
generating notifications of new travel-related information;
continuously and dynamically integrating the seamless travel hive repository, a travel reservation module, an experience mark manager module, a comparison module and consumer travel-related applications with each other; and
aggregating travel-related information contained in said experience marks.

9. The computer-implemented seamless travel hive method of claim 8, further comprising proactively generating experience marks based on travel-related information contained in a user's experience marks and in members' of a user's social network's experience marks.

10. The computer-implemented seamless travel hive method of claim 8, further comprising automatically updating said travel-related information in response to external events.

11. The computer-implemented seamless travel hive method of claim 8, further comprising facilitating a user's booking of a travel reservation.

12. The computer-implemented seamless travel hive method of claim 8, further comprising generating tags for tagging experience marks with keywords.

13. The computer-implemented seamless travel hive method of claim 12, further comprising sorting experience marks based on said tags or grouping together experience marks with similar tags.

14. The computer-implemented seamless travel hive method of claim 8, further comprising automatically generating or updating experience marks based on the occurrence of an external event.

15. The computer-implemented seamless travel hive method of claim 8, further comprising facilitating a search based on the number of experience marks that have been created for a particular travel reservation.
